# EUROPEAN PATENT SPECIFICATION

(11) **EP 1 172 942 B1**
(45) Date of publication and mention of the grant of the patent: **13.08.2003**
(21) Application number: 01124286.4
(22) Date of filing: 23.06.1997
(51) Int. Cl.: H04B 7/005, H04B 7/26, H04B 1/707

(54) **A method of controlling initial power ramp-up in CDMA systems by using short codes**
Ein Verfahren zum Kontrollieren des Hochfahrens der Anfangssendeleistung in einem CDMA System unter Verwendung kurzer Kodes
Utilisation de codes courts pour linéariser la montée en puissance initiale des systèmes AMDC

(30) Priority: 27.06.1996 US 670162; 27.06.1996 US 671068
(43) Date of publication of application: 16.01.2002
(62) Divisional of application: 97930175.1
(73) Proprietor: INTERDIGITAL TECHNOLOGY CORPORATION, Wilmington, DE 19801 (US)
(72) Inventor: Ozluturk, Fatih, Port Washington, NY 11050 (US); Lomp, Gary R., Centerport, NJ 11721 (US)
(74) Representative: Frohwitter, Bernhard, Dipl.-Ing.

(56) References cited:
- EP-A- 0 565 507
- PATENT ABSTRACTS OF JAPAN vol. 015, no. 003 (E-1019), 7 January 1991 (1991-01-07) & JP 02 256331 A (SHARP CORP), 17 October 1990 (1990-10-17)

## Description

### BACKGROUND OF THE INVENTION

### Field of the Invention

The present invention relates generally to CDMA communication systems. More specifically, the present invention relates to a CDMA communication system which utilizes the transmission of short codes from subscriber units to a base station to reduce the time required for the base station to detect the signal from a subscriber unit. The improved detection time allows a faster ramp-up of the initial transmit power from the subscriber units while reducing the unnecessary power overshoot.

### Description of Related Art

The use of wireless telecommunication systems has grown dramatically in the last decade as the reliability and capacity of the systems have improved. Wireless communication systems are being utilized in a variety of applications where land line based systems are impractical or impossible to use. Applications of wireless communications include cellular phone communications, communications in remote locations, and temporary communications for disaster recovery. Wireless communication systems have also become an economically viable alternative to replacing aging telephone lines and outdated telephone equipment.

The portion of the RF spectrum available for use by wireless communication systems is a critical resource. The RF spectrum must be shared among all commercial, governmental and military applications. There is a constant desire to improve the efficiency of wireless communication systems in order to increase system capacity.

Code division multiple access (CDMA) wireless communication systems have shown particular promise in this area. Although more traditional time division multiple access (TDMA) and frequency division multiple access (FDMA) systems have improved using the latest technological advances, CDMA systems, in particular Broadband Code Division Multiple Access™ (B-CDMA™) systems, have significant advantages over TDMA and FDMA systems. This efficiency is due to the improved coding and modulation density, interference rejection and multipath tolerance of B-CDMA™ systems, as well as reuse of the same spectrum in every communication cell. The format of CDMA communication signals also makes it extremely difficult to intercept calls, thereby ensuring greater privacy for callers and providing greater immunity against fraud.

In a CDMA system, the same portion of the frequency spectrum is used for communication by all subscriber units. Each subscriber unit's baseband data signal is multiplied by a code sequence, called the "spreading code", which has a much higher rate than the data. The ratio of the spreading code rate to the data symbol rate is called the "spreading factor" or the "processing gain". This coding results in a much wider transmission spectrum than the spectrum of the baseband data signal, hence the technique is called "spread spectrum". Subscriber units and their communications can be discriminated by assigning a unique spreading code to each communication link which is called a CDMA channel. Since all communications are sent over the same frequency band, each CDMA communication overlaps communications from other subscriber units and noise-related signals in both frequency and time.

The use of the same frequency spectrum by a plurality of subscriber units increases the efficiency of the system. However, it also causes a gradual degradation of the performance of the system as the number of users increase. Each subscriber unit detects communication signals with its unique spreading code as valid signals and all other signals are viewed as noise. The stronger the signal from a subscriber unit arrives at the base station, the more interference the base station experiences when receiving and demodulating signals from other subscriber units. Ultimately, the power from one subscriber unit may be great enough to terminate communications of other subscriber units. Accordingly, it is extremely important in wireless CDMA communication systems to control the transmission power of all subscriber units. This is best accomplished by using a closed loop power control algorithm once a communication link is established.

The control of transmission power is particularly critical when a subscriber unit is attempting to initiate communications with a base station and a power control loop has not yet been established. Typically, the transmission power required from a subscriber unit changes continuously as a function of the propagation loss, interference from other subscribers, channel noise, fading and other channel characteristics. Therefore, a subscriber unit does not know the power level at which it should start transmitting. If the subscriber unit begins transmitting at a power level that is too high, it may interfere with the communications of other subscriber units and may even terminate the communications of other subscriber units. If the initial transmission power level is too low, the subscriber unit will not be detected by the base station and a communication link will not be established.

There are many methods for controlling transmission power in a CDMA communication system. For example, U.S. Patent No. 5,056,109 (Gilhousen et al.) discloses a transmission power control system wherein the transmission power of the subscriber unit is based upon periodic signal measurements from both the subscriber unit and the base station. The base station transmits a pilot signal to all subscriber units which analyze the received pilot signal, estimate the power loss in the transmitted signal and adjust their transmission power accordingly. Each subscriber unit includes a non-linear loss output filter which prevents sudden increases in power which would cause interference to other subscriber units. This method is too complex to permit a base station to quickly acquire a subscriber unit while limiting the interference to other subscriber units. In addition, the propagation losses, interference and noise levels experienced in a forward link (transmission from the base station to a subscriber unit) is often not the same as in a reverse link (transmission from a subscriber unit to the base station). Reverse link power estimates based on forward link losses are not precise. European patent EP0565507 discloses a power control method wherein a mobile station initiates a random access at the lowest power level and increases the transmission power level until the base station detects the access signal. Once detected, the power level of the message is maintained at the detected level so that the signal interference is avoided.

Many other types of prior art transmission power control systems require complex control signaling between communicating units or preselected transmission values to control transmission power. These power control techniques are inflexible and often impractical to implement.

Accordingly, there is a need for an efficient method of controlling the initial ramp-up of transmission power by subscriber units in a wireless CDMA communication system.

### SUMMARY OF THE INVENTION

The present invention comprises a novel method of controlling transmission power during the establishment of a channel in a CDMA communication system by utilizing the transmission of a short code from a subscriber unit to a base station during initial power ramp-up. The short code is a sequence for detection by the base station which has a much shorter period than a conventional spreading code. The ramp-up starts from a power level that is guaranteed to be lower than the required power level for detection by the base station. The subscriber unit quickly increases transmission power while repeatedly transmitting the short code until the signal is detected by the base station. Once the base station detects the short code, it sends an indication to the subscriber unit to cease increasing transmission power. The use of short codes limits power overshoot and interference to other subscriber stations and permits the base station to quickly synchronize to the spreading code used by the subscriber unit.

Accordingly, it is an object of the present invention to provide an improved technique for controlling power ramp-up during establishment of a communication channel between a CDMA subscriber unit and base station.

Other objects and advantages of the present invention will become apparent after reading the description of a presently preferred embodiment.

### BRIEF DESCRIPTION OF THE DRAWINGS

**Figure 1** is a schematic overview of a code division multiple access communication system in accordance with the present invention;
**Figure 2** is a diagram showing the operating range of a base station;
**Figure 3** is a timing diagram of communication signals between a base station and a subscriber unit;
**Figure 4** is a flow diagram of the establishment of a communication channel between a base station and a subscriber unit;
**Figure 5** is a graph of the transmission power output from a subscriber unit;
**Figures 6A and 6B** are flow diagrams of the establishment of a communication channel between a base station and a subscriber unit in accordance with the preferred embodiment of the present invention using short codes;
**Figure 7** is a graph of the transmission power output from a subscriber unit using short codes;
**Figure 8** shows the adaptive selection of short codes;
**Figure 9** is a block diagram of a base station in accordance with the present invention;
**Figure 10** is a block diagram of the subscriber unit in accordance with the present invention;
**Figures 11A** and **11B** are flow diagrams of the ramp-up procedure implemented in accordance with the present invention; and
**Figure 12** is a diagram showing the propagation of signals between a base station and a plurality of subscriber units;
**Figure 13** is a flow diagram of the preferred embodiment of the initial establishment of a communication channel between a base station and a subscriber unit using slow initial acquisition;
**Figure 14** is a flow diagram of the preferred embodiment of the reestablishment of a communication channel between a base station and a subscriber unit using fast re-acquisition;
**Figure 15A** is a diagram of the communications between a base station and a plurality of subscriber units;
**Figure 15B** is a diagram of the base station and a subscriber unit which has been virtually located;
**Figure 16** is a schematic overview of a plurality of subscriber units which have been virtually located;
**Figure 17** is a subscriber unit made in accordance with the teachings of the present invention;
**Figure 18** is a flow diagram of an alternative embodiment of the initial establishment of a communication channel between a base station and a subscriber unit using slow initial acquisition;
**Figure 19** is a flow diagram of an alternative embodiment of the reestablishment of a communication channel between a base station and a subscriber unit using fast re-acquisition; and
**Figure 20** is a flow diagram of a second alternative embodiment of the initial establishment of a communication channel between a base station and a subscriber unit using slow initial acquisition.

### DETAILED DESCRIPTION OF THE PREFERRED EMBODIMENT

The preferred embodiment will be described with reference to the drawing figures where identical numerals represent similar elements throughout.

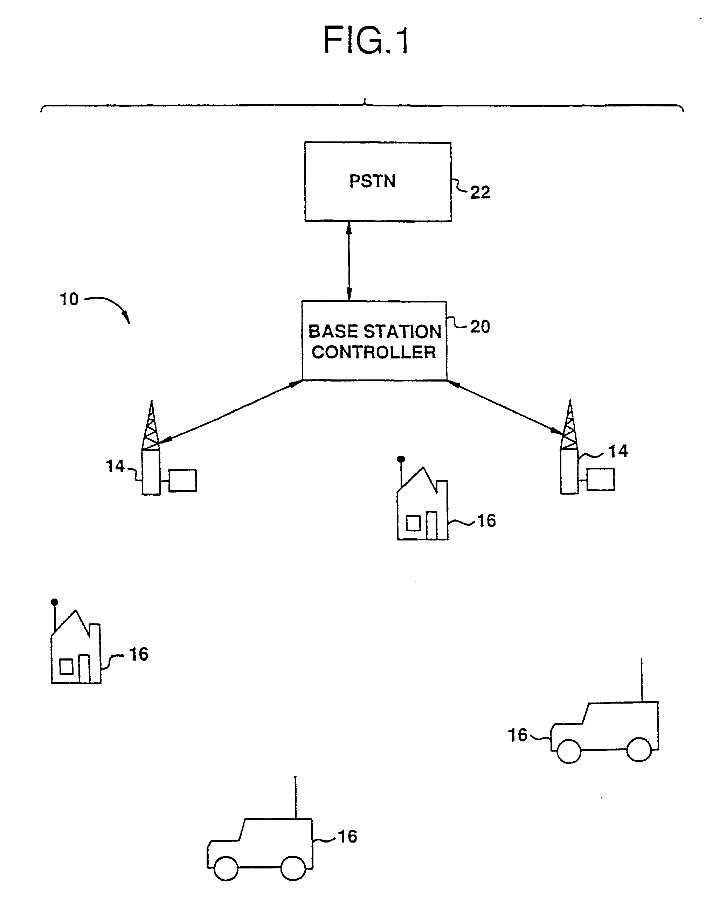

A communication network **10** embodying the present invention is shown in **Figure 1**. The communication network **10** generally comprises one or more base stations **14**, each of which is in wireless communication with a plurality of subscriber units **16**, which may be fixed or mobile. Each subscriber unit **16** communicates with either the closest base station **14** or the base station **14** which provides the strongest communication signal. The base stations **14** also communicate with a base station controller **20**, which coordinates communications among base stations **14**. The communication network **10** may also be connected to a public switched telephone network (PSTN) **22**, wherein the base station controller **20** also coordinates communications between the base stations **14** and the PSTN **22**. Preferably, each base station **14** communicates with the base station controller **20** over a wireless link, although a land line may also be provided. A land line is particularly applicable when a base station **14** is in close proximity to the base station controller **20.**

The base station controller **20** performs several functions. Primarily, the base station controller **20** provides all of the operations, administrative and maintenance (OA&M) signaling associated with establishing and maintaining all of the wireless communications between the subscriber units **16**, the base stations **14**, and the base station controller **20**. The base station controller **20** also provides an interface between the wireless communication system **10** and the PSTN **22.** This interface includes multiplexing and demultiplexing of the communication signals that enter and leave the system **10** via the base station controller **20.** Although the wireless communication system **10** is shown employing antennas to transmit RF signals, one skilled in the art should recognize that communications may be accomplished via microwave or satellite uplinks. Additionally, the functions of the base station controller **20** may be combined with a base station **14** to form a "master base station".

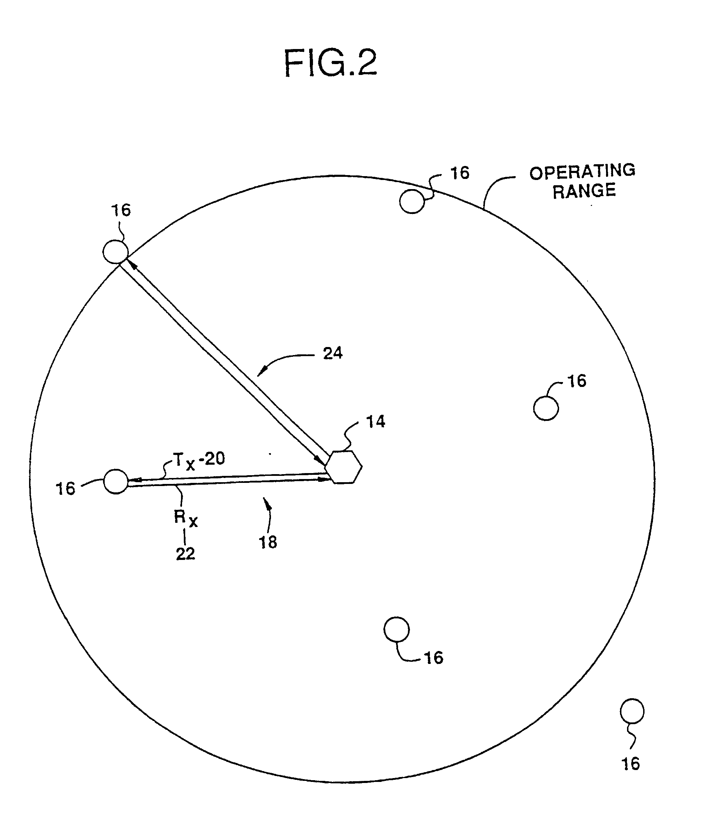

Referring to **Figure 2**, the propagation of signals between a base station **14** and a plurality of subscriber units **16** is shown. A two-way communication channel (link) **18** comprises a signal transmitted **20** (Tx) from the base station **14** to the subscriber unit **16** and a signal received 22 (Rx) by the base station **14** from the subscriber unit **16**. The Tx signal **20** is transmitted from the base station **14** and is received by the subscriber unit **16** after a propagation delay Δt. Similarly, the Rx **22** signal originates at the subscriber unit **16** and terminates at the base station **14** after a further propagation delay Δt. Accordingly, the round trip propagation delay is 2Δt. In the preferred embodiment, the base station **14** has an operating range of approximately 30 kilometers. The round trip propagation delay **24** associated with a subscriber unit **16** at the maximum operating range is 200 microseconds.

It should be apparent to those of skill in the art that the establishment of a communication channel between a base station and a subscriber unit is a complex procedure involving many tasks performed by the base station **14** and the subscriber unit **16** which are outside the scope of the present invention. The present invention is directed to initial power ramp-up and synchronization during the establishment of a communication channel.

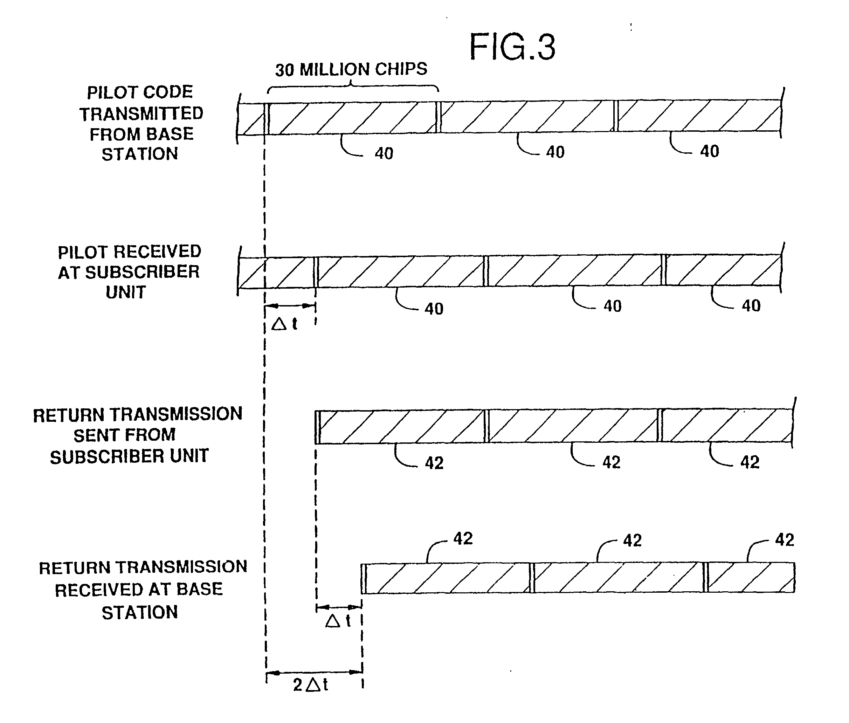

Referring to **Figure 3**, the signaling between a base station **14** and a subscriber unit **16** is shown. In accordance with the present invention, the base station **14** continuously transmits a pilot code **40** to all of the subscriber units **16** located within the transmitting range of the base station **14**. The pilot code **40** is a spreading code which carries no data bits. The pilot code **40** is used for subscriber unit **16** acquisition and synchronization, as well as for determining the parameters of the adaptive matched filter used in the receiver.

The subscriber unit **16** must acquire the pilot code **40** transmitted by the base station **14** before it can receive or transmit any data. Acquisition is the process whereby the subscriber unit **16** aligns its locally generated spreading code with the received pilot code **40**. The subscriber unit **16** searches through all of the possible phases of the received pilot code **40** until it detects the correct phase, (the beginning of the pilot code **40**).

The subscriber unit **16** then synchronizes its transmit spreading code to the received pilot code **40** by aligning the beginning of its transmit spreading code to the beginning of the pilot code **40**. One implication of this receive and transmit synchronization is that the subscriber unit **16** introduces no additional delay as far as the phase of the spreading codes are concerned. Accordingly, as shown in **Figure 3**, the relative delay between the pilot code **40** transmitted from the base station **14** and the subscriber unit's transmit spreading code **42** received at the base station **14** is 2Δt, which is solely due to the round trip propagation delay.

In the preferred embodiment, the pilot code is 29,877,120 chips in length and takes approximately 2 to 5 seconds to transmit, depending on the spreading factor. The length of the pilot code **40** was chosen to be a multiple of the data symbol no matter what kind of data rate or bandwidth is used. As is well known by those of skill in the art, a longer pilot code **40** has better randomness properties and the frequency response of the pilot code **40** is more uniform. Additionally, a longer pilot code **40** provides low channel cross correlation, thus increasing the capacity of the system **10** to support more subscriber units **16** with less interference. The use of a long pilot code **40** also supports a greater number of random short codes. For synchronization purposes, the pilot code **40** is chosen to have the same period as all of the other spreading codes used by the system **10**. Thus, once a subscriber unit **16** acquires the pilot code **40**, it is synchronized to all other signals transmitted from the base station **14**.

During idle periods, when a call is not in progress or pending, the subscriber unit **16** remains synchronized to the base station **14** by periodically reacquiring the pilot code **40.** This is necessary for the subscriber unit **16** to receive and demodulate any downlink transmissions, in particular paging messages which indicate incoming calls.

When a communication link is desired, the base station **14** must acquire the signal transmitted from the subscriber unit **16** before it can demodulate the data. The subscriber unit **16** must transmit an uplink signal for acquisition by the base station **14** to begin establishing the two-way communication link. A critical parameter in this procedure is the transmission power level of the subscriber unit **16.** A transmission power level that is too high can impair communications in the whole service area, whereas a transmission power level that is too low can prevent the base station **14** from detecting the uplink signal.

In a first embodiment of the present invention the subscriber unit **16** starts transmitting at a power level guaranteed to be lower than what is required and increases transmission power output until the correct power level is achieved. This avoids sudden introduction of a strong interference, hence improving system **10** capacity.

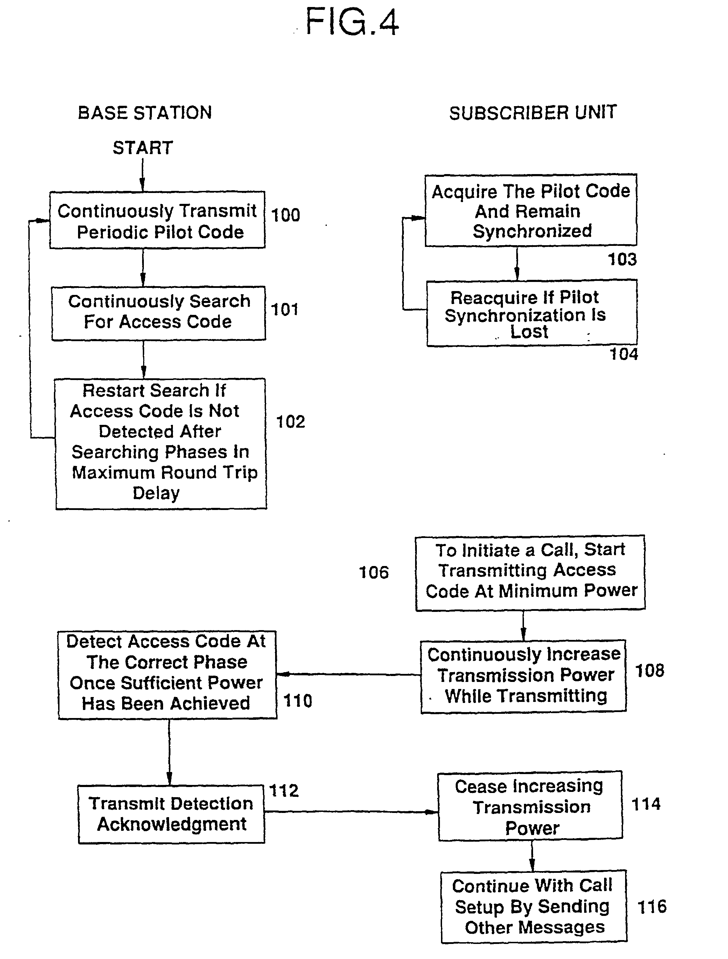

The establishment of a communication channel in accordance with the present invention and the tasks performed by the base station **14** and a subscriber unit **16** are shown in **Figure 4**. Although many subscriber units **16** may be located within the operating range of the base station **14**, reference will be made hereinafter to a single subscriber unit **16** for simplicity in explaining the operation of the present invention.

The base station **14** begins by continuously transmitting a periodic pilot code **40** to all subscriber units **16** located within the operating range of the base station **14 (step 100).** As the base station **14** transmits the pilot code **40 (step 100),** the base station **14** searches **(step 101)** for an "access code" **42** transmitted by a subscriber unit **16.** The access code **42** is a known spreading code transmitted from a subscriber unit **16** to the base station **14** during initiation of communications and power ramp-up. The base station **14** must search through all possible phases (time shifts) of the access code **42** transmitted from the subscriber unit **16** in order to find the correct phase. This is called the "acquisition" or the "detection" process **(step 101)**. The longer the access code **42**, the longer it takes for the base station **14** to search through the phases and acquire the correct phase.

As previously explained, the relative delay between signals transmitted from the base station **14** and return signals received at the base station **14** corresponds to the round trip propagation delay 2Δt. The maximum delay occurs at the maximum operating range of the base station **14**, known as the cell boundary. Accordingly, the base station **14** must search up to as many code phases as there are in the maximum round trip propagation delay, which is typically less code phases than there are in a code period.

For a data rate Rb and spreading code rate Rc, the ratio L = Rc/Rb is called the spreading factor or the processing gain. In the preferred embodiment of the present invention, the cell boundary radius is 30 km, which corresponds to approximately between 1000 and 2500 code phases in the maximum round trip delay, depending on the processing gain.

If the base station **14** has not detected the access code after searching through the code phases corresponding to the maximum round trip delay the search is repeated starting from the phase of the pilot code **40** which corresponds to zero delay **(step 102).**

During idle periods, the pilot code **40** from the base station **14** is received at the subscriber unit **16** which periodically synchronizes its transmit spreading code generator thereto **(step 103)**. If synchronization with the pilot code **40** is lost, the subscriber unit **16** reacquires the pilot code **40** and resynchronizes **(step 104)**.

When it is desired to initiate a communication link, the subscriber unit **16** starts transmitting the access code **42** back to the base station **14 (step 106).** The subscriber unit **16** continuously increases the transmission power while retransmitting the access code **42 (step 108)** until it receives an acknowledgment from the base station **14**. The base station **14** detects the access code **42** at the correct phase once the minimum power level for reception has been achieved **(step 110).** The base station **14** subsequently transmits an access code detection acknowledgment signal **(step 112)** to the subscriber unit **16**. Upon receiving the acknowledgment, the subscriber unit ceases the transmission power increase **(step 114).** With the power ramp-up completed, closed loop power control and call setup signaling is performed **(step 116)** to establish the two-way communication link.

Although this embodiment limits subscriber unit **16** transmission power, acquisition of the subscriber unit **16** by the base station **14** in this manner may lead to unnecessary power overshoot from the subscriber unit **16**, thereby reducing the performance of the system **10**.

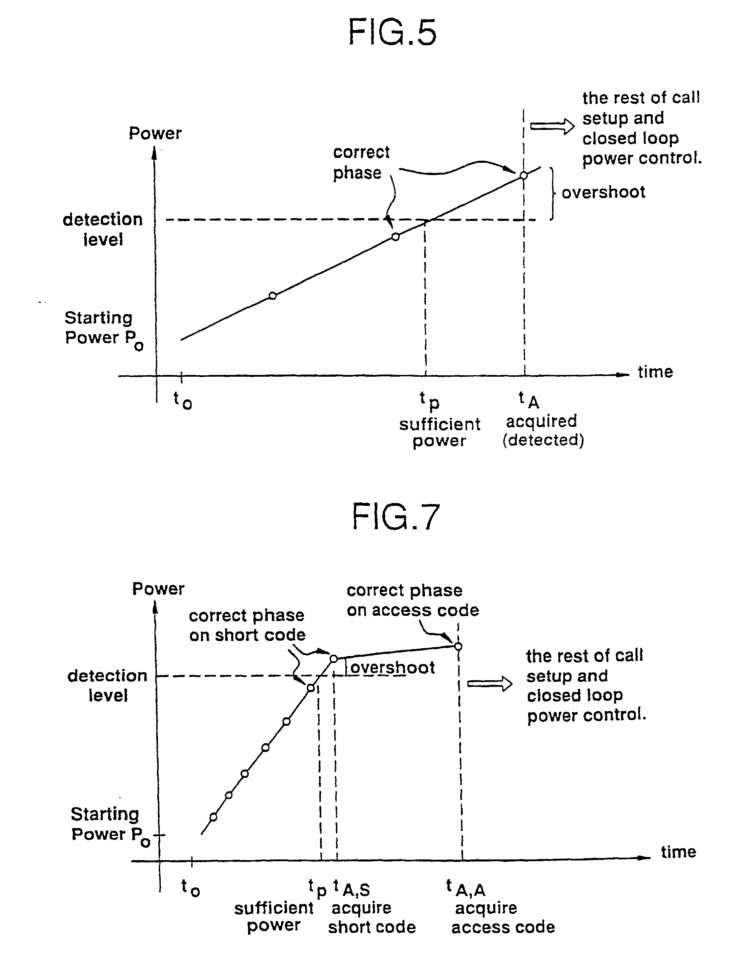

The transmission power output profile of the subscriber unit **16** is shown in **Figure 5**. At t₀, the subscriber unit **16** starts transmitting at the starting transmission power level P₀, which is a power level guaranteed to be less than the power level required for detection by the base station **14.** The subscriber unit **16** continually increases the transmission power level until it receives the detection indication from the base station **14**. For the base station **14** to properly detect the access code **42** from the subscriber unit **16** the access code **42** must: 1) be received at a sufficient power level; and 2) be detected at the proper phase. Accordingly, referring to **Figure 5**, although the access code **42** is at a sufficient power level for detection by the base station **14** at t_{P}, the base station **14** must continue searching for the correct phase of the access code **42** which occurs at t_{A}.

Since the subscriber unit **16** continues to increase the output transmission power level until it receives the detection indication from the base station **14**, the transmission power of the access code **42** exceeds the power level required for detection by the base station **14**. This causes unnecessary interference to all other subscriber units **16**. If the power overshoot is too large, the interference to other subscriber units **16** may be so severe as to terminate ongoing communications of other subscriber units **16**.

The rate that the subscriber unit **16** increases transmission power to avoid overshoot may be reduced, however, this results in a longer call setup time. Those of skill in the art would appreciate that adaptive ramp-up rates can also be used, yet these rates have shortcomings and will not appreciably eliminate power overshoot in all situations.

The preferred embodiment of the present invention utilizes "short codes" and a two-stage communication link establishment procedure to achieve fast power ramp-up without large power overshoots. The spreading code transmitted by the subscriber unit **16** is much shorter than the rest of the spreading codes (hence the term short code), so that the number of phases is limited and the base station **14** can quickly search through the code. The short code used for this purpose carries no data.

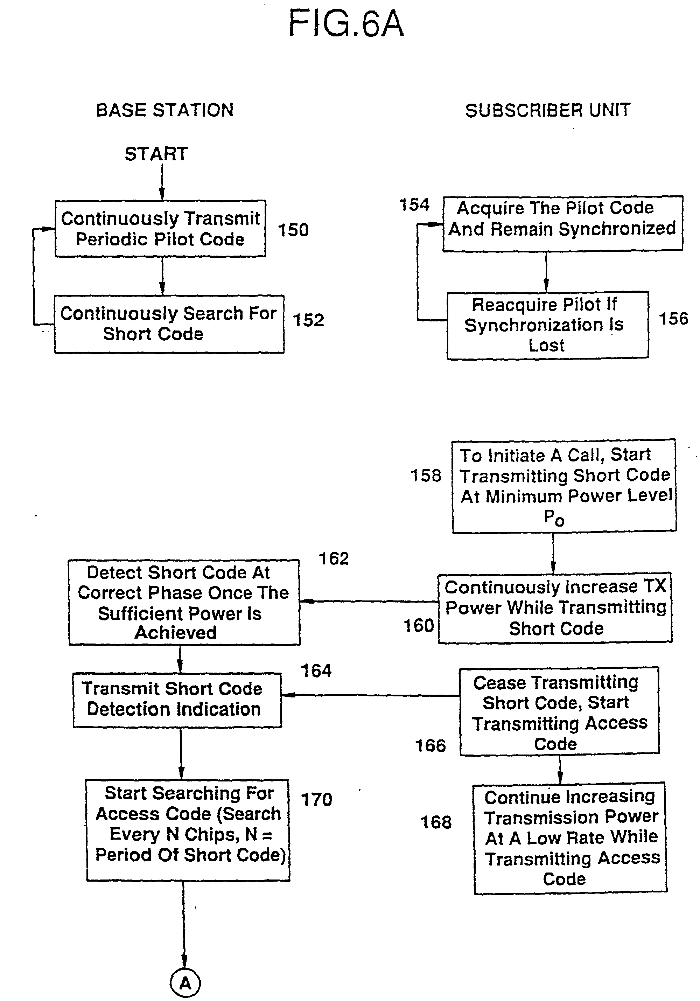

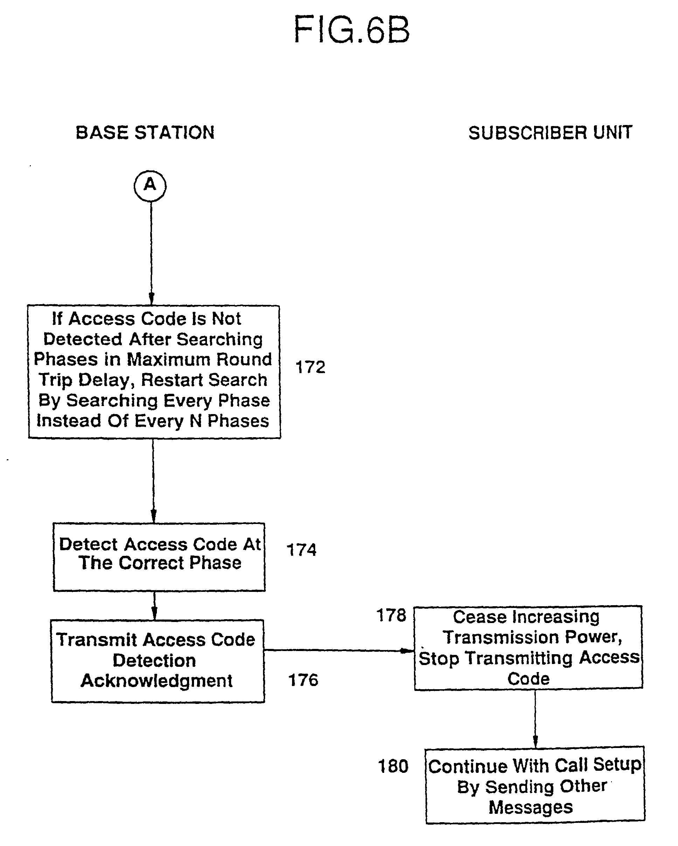

The tasks performed by the base station 14 and the subscriber unit **16** to establish a communication channel using short codes in accordance with the preferred embodiment of the present invention are shown in **Figures 6A** and **6B.** During idle periods, the base station **14** periodically and continuously transmits the pilot code to all subscriber units **16** located within the operating range of the base station **14 (step 150).** The base station **14** also continuously searches for a short code transmitted by the subscriber unit **16** (**step 152**). The subscriber unit **16** acquires the pilot code and synchronizes its transmit spreading code generator to the pilot code. The subscriber unit **16** also periodically checks to ensure it is synchronized. If synchronization is lost, the subscriber unit **16** reacquires the pilot signal transmitted by the base station **(step 156)**.

When a communication link is desired, the subscriber unit **16** starts transmitting a short code at the minimum power level P₀ **(step 158)** and continuously increases the transmission power level while retransmitting the short code **(step 160)** until it receives an acknowledgment from the base station **14** that the short code has been detected by the base station **14.**

The access code in the preferred embodiment, as previously described herein, is approximately 30 million chips in length. However, the short code is much smaller. The short code can be chosen to be any length that is sufficiently short to permit quick detection. There is an advantage in choosing a short code length such that it divides the access code period evenly. For the access code described herein, the short code is preferably chosen to be 32, 64 or 128 chips in length. Alternatively, the short code may be as short as one symbol length, as will be described in detail hereinafter.

Since the start of the short code and the start of the access code are synchronized, once the base station **14** acquires the short code, the base station **14** knows that the corresponding phase of the access code is an integer multiple of N chips from the phase of the short code where N is the length of the short code. Accordingly, the base station **14** does not have to search all possible phases corresponding to the maximum round trip propagation delay.

Using the short code, the correct phase for detection by the base station **14** occurs much more frequently. When the minimum power level for reception has been achieved, the short code is quickly detected **(step 162)** and the transmission power overshoot is limited. The transmission power ramp-up rate may be significantly increased without concern for a large power overshoot. In the preferred embodiment of the present invention, the power ramp-up rate using the short code is 1 dB per millisecond.

The base station **14** subsequently transmits a short code detection indication signal **(step 164)** to the subscriber unit **16** which enters the second stage of the power ramp-up upon receiving this indication. In this stage, the subscriber unit **16** ceases transmitting the short code **(step 166)** and starts continuously transmitting a periodic access code **(step 166)**. The subscriber unit **16** continues to ramp-up its transmission power while transmitting the access code, however the ramp-up rate is now much lower than the previous ramp-up rate used with the short code **(step 168).** The ramp-up rate with the access code is preferably 0.05 dB per millisecond. The slow ramp-up avoids losing synchronization with the base station **14** due to small changes in channel propagation characteristics.

At this point, the base station **14** has detected the short code at the proper phase and power level **(step 162)**. The base station **14** must now synchronize to the access code which is the same length as all other spreading codes and much longer than the short code. Utilizing the short code, the base station **14** is able to detect the proper phase of the access code much more quickly. The base station **14** begins searching for the proper phase of the access code **(step 170)**. However, since the start of the access code is synchronized with the start of the short code, the base station **14** is only required to search every N chips; where N = the length of the short code. In summary, the base station **14** quickly acquires the access code of the proper phase and power level by: 1) detecting the short code; and 2) determining the proper phase of the access code by searching every N chips of the access code from the beginning of the short code.

If the proper phase of the access code has not been detected after searching the number of phases in the maximum round trip delay the base station **14** restarts the search for the access code by searching every chip instead of every N chips **(step 172)**. When the proper phase of the access code has been detected **(step 174)** the base station **14** transmits an access code detection acknowledgment **(step 176)** to the subscriber unit **16** which ceases the transmission power increase **(step 178)** upon receiving this acknowledgment. With the power ramp-up completed, closed loop power control and call setup signaling is performed **(step 180)** to establish the two-way communication link.

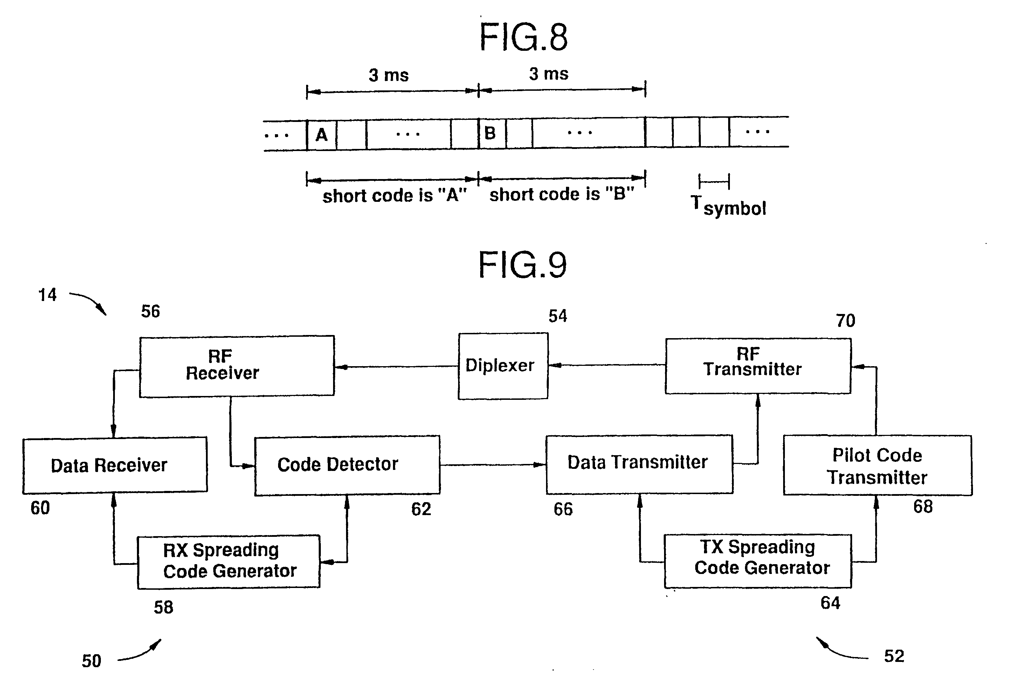

Referring to **Figure 7,** although the smarting power level P₀ is the same as in the prior embodiment, the subscriber unit **16** may ramp-up the transmission power level at a much higher rate by using a short code. The short code is quickly detected after the transmission power level surpasses the minimum detection level, thus minimizing the amount of transmission power overshoot.

Although the same short code may be reused by the subscriber unit **16**, in the preferred embodiment of the present invention the short codes are dynamically selected and updated in accordance with the following procedure. Referring to **Figure 8**, the period of the short code is equal to one symbol length and the start of each period is aligned with a symbol boundary. The short codes are generated from a regular length spreading code. A symbol length portion from the beginning of the spreading code is stored and used as the short code for the next 3 milliseconds. Every 3 milliseconds, a new symbol length portion of the spreading code replaces the old short code. Since the spreading code period is an integer multiple of 3 milliseconds, the same short codes are repeated once every period of the spreading code. Periodic updating of the short code averages the interference created by the short code over the entire spectrum.

A block diagram of the base station **14** is shown in **Figure 9.** Briefly described, the base station **14** comprises a receiver section **50,** a transmitter section **52** and a diplexer **54**. An RF receiver **56** receives and down-converts the RF signal received from the diplexer **54**. The receive spreading code generator **58** outputs a spreading code to both the data receiver **60** and the code detector **62.** In the data receiver **60,** the spreading code is correlated with the baseband signal to extract the data signal which is forwarded for further processing. The received baseband signal is also forwarded to the code detector **62** which detects the access code or the short code from the subscriber unit **16** and adjusts the timing of the spreading code generator **58** to establish a communication channel **18**.

In the transmitter section **52** of the base station **14,** the transmit spreading code generator **64** outputs a spreading code to the data transmitter **66** and the pilot code transmitter **68.** The pilot code transmitter **68** continuously transmits the periodic pilot code. The data transmitter **66** transmits the short code detect indication and access code detect acknowledgment after the code detector **62** has detected the short code or the access code respectively. The data transmitter also sends other message and data signals. The signals from the data transmitter **66** and the pilot code transmitter **68** are combined and up-converted by the RF transmitter **70** for transmission to the subscriber units **16**.

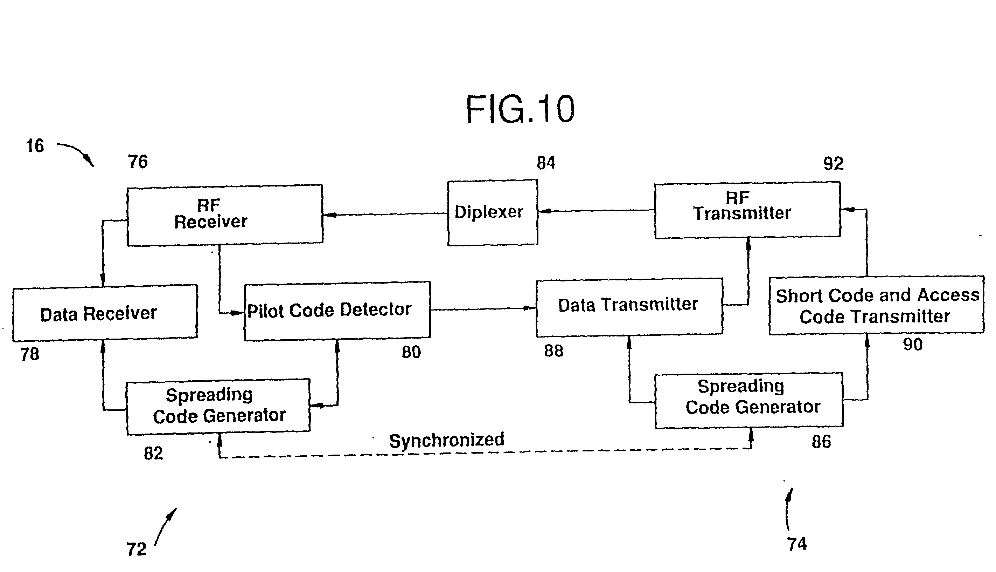

A block diagram of the subscriber unit **16** is shown in **Figure 10**. Briefly described, the subscriber unit **16** comprises a receiver section **72**, a transmitter section **74** and a diplexer **84**. An RF receiver **76** receives and down-converts the RF signal received from the diplexer **84**. A pilot code detector **80** correlates the spreading code with the baseband signal to acquire the pilot code transmitted by the base station **16**. In this manner, the pilot code detector **80** maintains synchronization with the pilot code. The receiver spreading code generator **82** generates and outputs a spreading code to the data receiver **78** and the pilot code detector **80.** The data receiver **78** correlates the spreading code with the baseband signal to process the short code detect indication and the access code detect acknowledgment transmitted by the base station **16**.

The transmitter section **74** comprises a spreading code generator **86** which generates and outputs spreading codes to a data transmitter **88** and a short code and access code transmitter **90**. The short code and access code transmitter **90** transmits these codes at different stages of the power ramp-up procedure as hereinbefore described. The signals output by the data transmitter **88** and the short code and access code transmitter **90** are combined and up-converted by the RF transmitter **92** for transmission to the base station **14**. The timing of the receiver spreading code generator **82** is adjusted by the pilot code detector **80** through the acquisition process. The receiver and transmitter spreading code generators **82**, **86** are also synchronized.

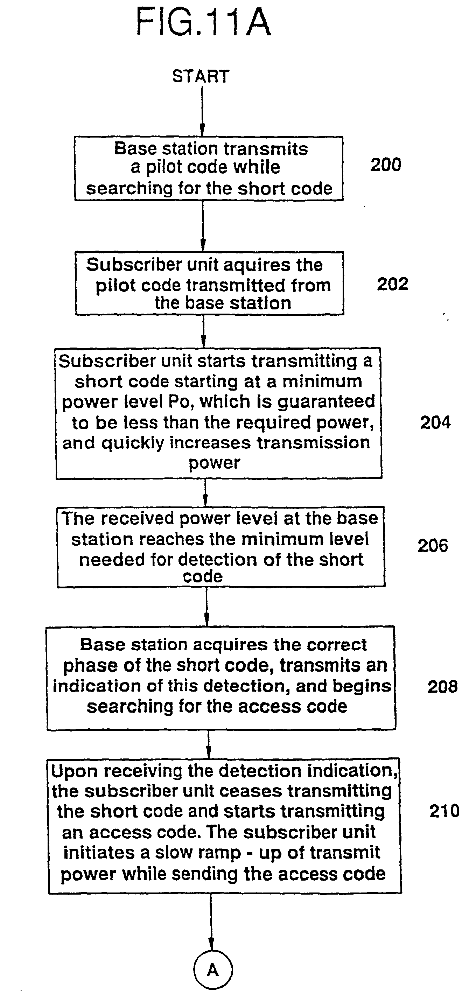

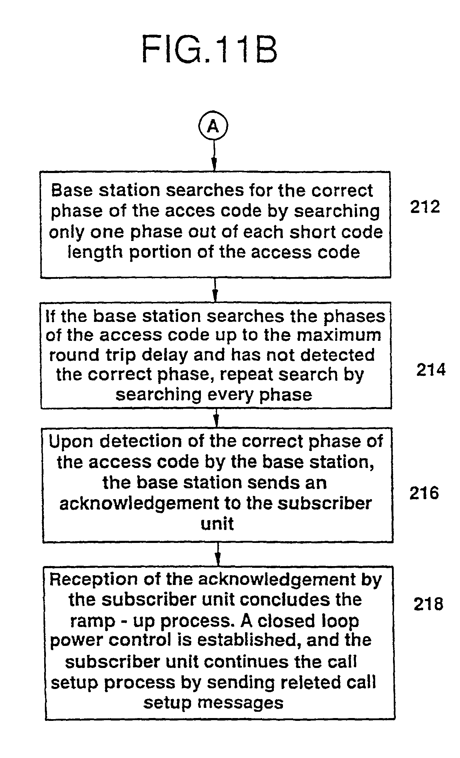

An overview of the ramp-up procedure in accordance with the preferred current invention is summarized in **Figures 11A** and **11B**. The base station **14** transmits a pilot code while searching for the short code **(step 200).** The subscriber unit **16** acquires the pilot code transmitted from the base station **14 (step 202),** starts transmitting a short code starting at a minimum power level P₀ which is guaranteed to be less than the required power, and quickly increases transmission power **(step 204)**. Once the received power level at the base station **14** reaches the minimum level needed for detection of the short code **(step 206)** the base station **14** acquires the correct phase of the short code, transmits an indication of this detection, and begins searching for the access code **(step 208)**. Upon receiving the detection indication, the subscriber unit **16** ceases transmitting the short code and starts transmitting an access code. The subscriber unit **16** initiates a slow ramp-up of transmit power while sending the access code **(step 210).** The base station **14** searches for the correct phase of the access code by searching only one phase out of each short code length portion of the access code **(step 212)**. If the base station **14** searches the phases of the access code up to the maximum round trip delay and has not detected the correct phase, the search is repeated by searching every phase **(step 214)**. Upon detection of the correct phase of the access code by the base station **14**, the base station **14** sends an acknowledgment to the subscriber unit **16 (step 216)**. Reception of the acknowledgment by the subscriber unit **16** concludes the ramp-up process. A closed loop power control is established, and the subscriber unit **16** continues the call setup process by sending related call setup messages **(step 218)**.

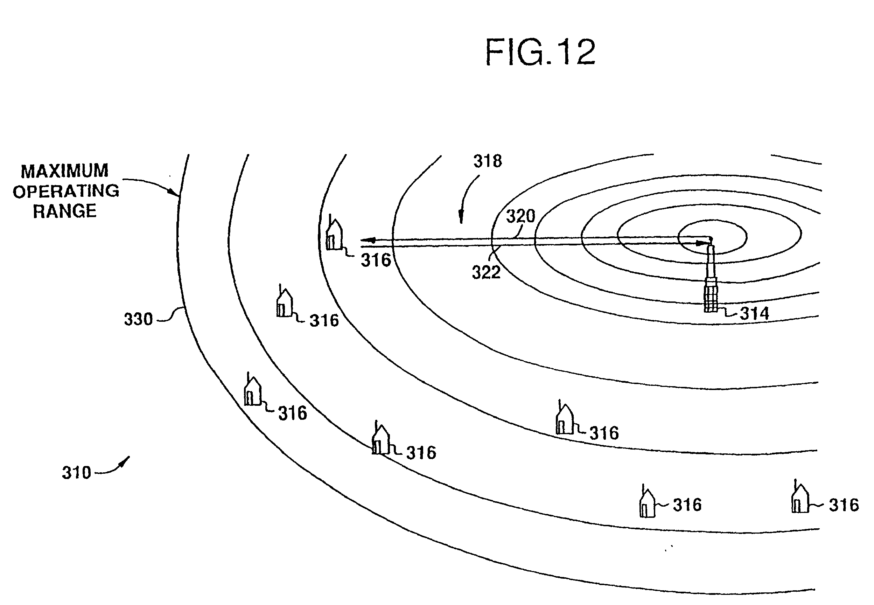

An alternative embodiment of the present invention in the reestablishment of a communication link will be described with reference to **Figure 12**. The propagation of certain signals in the establishment of a communication channel **318** between a base station **314** and a plurality of subscriber units **316** is shown. The forward pilot signal **320** is transmitted from the base station **314** at time t0, and is received by a subscriber unit **316** after a propagation delay Δt. To be acquired by the base station **314** the subscriber unit **316** transmits an access signal **322** which is received by the base station **314** after a further propagation delay of Δt. Accordingly, the round trip propagation delay is 2Δt. The access signal **322** is transmitted epoch aligned to the forward pilot signal **320,** which means that the code phase of the access signal **322** when transmitted is identical to the code phase of the received forward pilot signal **320**.

The round trip propagation delay depends upon the location of a subscriber unit **316** with respect to the base station **314**. Communication signals transmitted between a subscriber unit **316** located closer to the base station **314** will experience a shorter propagation delay than a subscriber unit **316** located further from the base station **314**. Since the base station **314** must be able to acquire subscriber units **316** located at any position within the cell **330**, the base station **314** must search all code phases of the access signal corresponding to the entire range of propagation delays of the cell **330**.

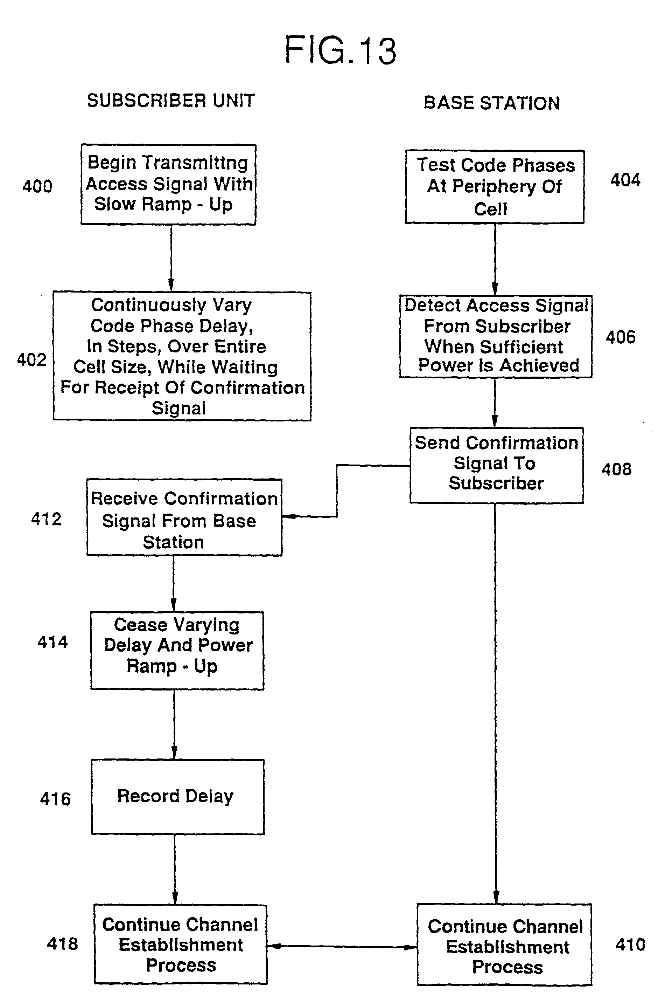

Referring to **Figure 13**, the tasks associated with initial acquisition of a subscriber unit **316** by a base station **314** are shown. When a subscriber unit **316** desires the establishment of a channel **318** with a base station **314** with which it has never established a channel, the subscriber unit **316** has no knowledge of the two-way propagation delay. Accordingly, the subscriber unit **316** enters the initial acquisition channel establishment process.

The subscriber unit **316** selects a low initial power level and zero code phase delay, (epoch aligning the code phase of the transmitted access signal **322** to the code phase of the received forward pilot signal **320**), and commences transmitting the access signal **322** while slowly (0.05-0.1 dB/msec) ramping-up transmission power **(step 400)**. While the subscriber unit **316** is awaiting receipt of the confirmation signal from the base station **314**, it varies the code phase delay in predetermined steps from zero to the delay corresponding to the periphery of the cell **330**, (the maximum code phase delay), allowing sufficient time between steps for the base station **314** to detect the access signal **322 (step 402)**. If the subscriber unit **316** reaches the code phase delay corresponding to the periphery of the cell **330**, it repeats the process of varying the code phase delay while continuing the slow power ramp-up **(step 402)**.

In order to acquire subscriber units **316** desiring access, the base station **314** continuously transmits a forward pilot signal **320** and attempts to detect the access signals **322** from subscriber units **316 (step 404).** Rather than test for access signals **322** at all code phase delays within the cell **330** as with current systems, the base station **314** need only test code phase delays centered about the periphery of the cell **330.**

The base station **314** detects the access signal **322** (**step 406)** when the subscriber unit **316** begins transmitting with sufficient power at the code phase delay which makes the subscriber unit **316** appear to be at the periphery of the cell 330, thereby "virtually" locating the subscriber unit **316** at the periphery of the cell **330**. The base station **314** then transmits a signal to the subscriber unit **316** which confirms that the access signal **322** has been received **(step 408)** and continues with the channel establishment process **(step 410)**.

Once the subscriber unit **316** receives the confirmation signal **(step 412)**, it ceases the ramp-up of transmission power, ceases varying the code phase delay **(step 414)** and records the value of the code phase delay for subsequent re-acquisitions **(step 416)**. The subscriber unit **316** then continues the channel establishment process including closed-loop power transmission control **(step 418).**

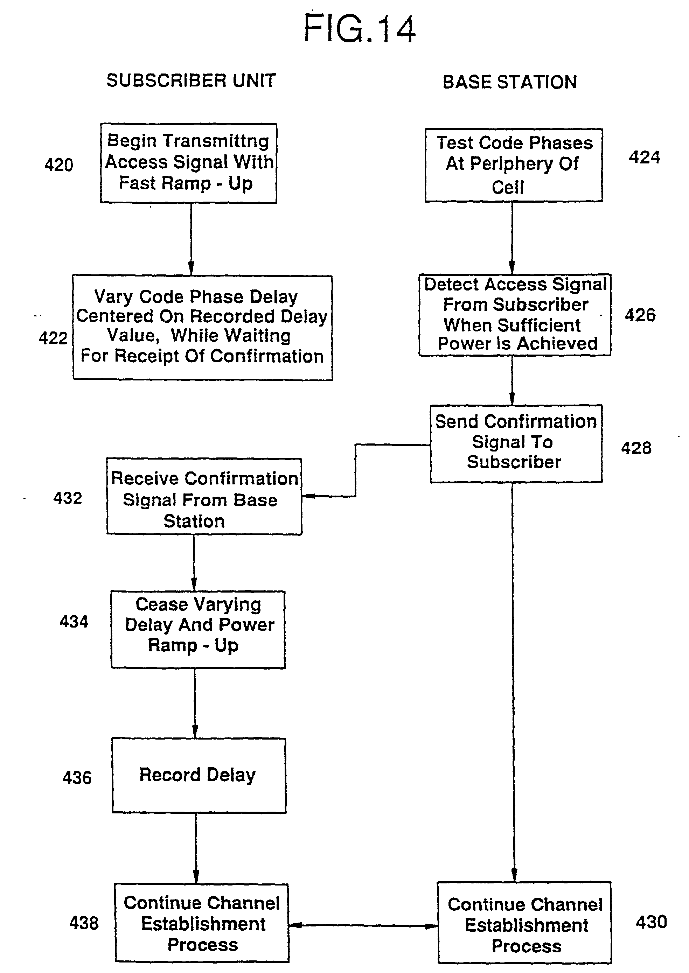

On subsequent re-acquisitions when a subscriber unit **316** desires the establishment of a channel **318** with a base station **314**, the subscriber unit **316** enters the re-acquisition channel establishment process shown in **Figure 14**. The subscriber unit **316** selects a low initial power level and the code phase delay recorded during the initial acquisition process, (shown in **Figure 13**), and commences continuously transmitting the access signal **322** while quickly (1 dB/msec) ramping-up transmission power **(step 420)**. While the subscriber unit **316** is awaiting receipt of the confirmation signal from the base station **314**, it slightly varies the code phase delay of the access signal **322** about the recorded code phase delay, allowing sufficient time for the base station **314** to detect the access signal **322** before changing the delay **(step 422)**. The base station **314** as in **Figure 13**, transmits a forward pilot signal **320** and tests only the code phase delays at the periphery of the cell **330** in attempting to acquire the subscriber units **316** within its operating range **(step 424)**. The base station **314** detects the access signal **322** when the subscriber unit **316** transmits with sufficient power at the code phase delay which makes the subscriber unit **316** appear to be at the periphery of the cell **330 (step 426)**. The base station **314** transmits a signal to the subscriber unit **316** which confirms that the access signal **322** has been received **(step 428)** and continues with the channel establishment process **(step 430)**.

When the subscriber unit **316** receives the confirmation signal **(step 432)** it ceases power ramp-up, ceases varying the code phase delay **(step 434)** and records the present value of the code phase delay for subsequent re-acquisitions **(step 436)**. This code phase delay may be slightly different from the code phase delay initially used when starting the re-acquisitions process **(step 422)**. The subscriber unit **316** then continues the channel establishment process at the present power level **(step 438).** If a subscriber unit **316** has not received a confirmation signal from the base station **314** after a predetermined time, the subscriber unit **316** reverts to the initial acquisition process described in **Figure 13**.

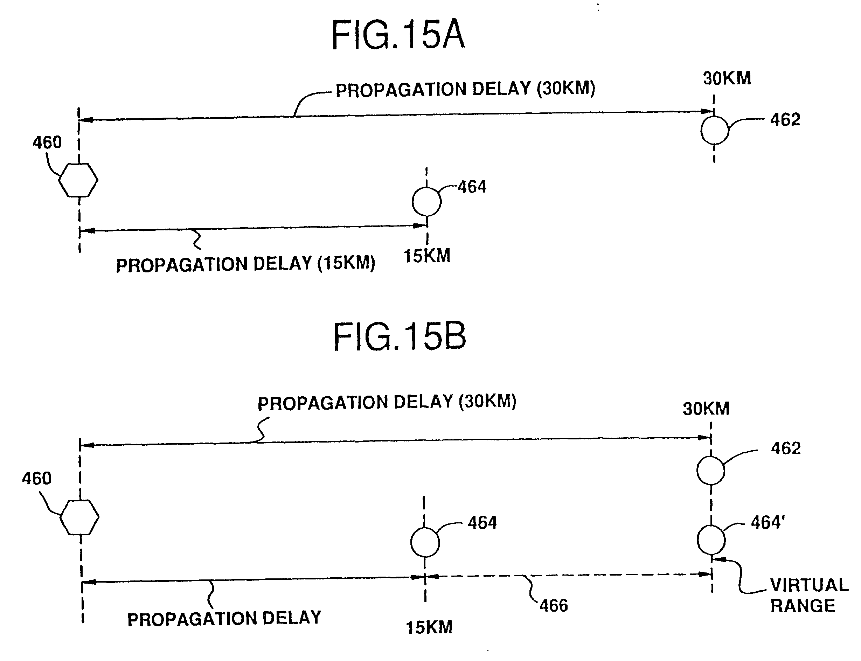

The effect of introducing a code phase delay in the Tx **320** and Rx **322** communications between the base station **314** and a subscriber unit **316** will be explained with reference to **Figures 15A** and **15B.** Referring to **Figure 15A,** a base station **460** communicates with two subscriber units **462, 464.** The first subscriber unit **462 is** located 30 km from the base station **460** at the maximum operating range. The second subscriber unit **464** is located 15 km from the base station **460**. The propagation delay of Tx and Rx communications between the first subscriber unit **462** and the base station **460** will be twice that of communications between the second subscriber unit **464** and the base station **460.**

Referring to **Figure 15B,** after an added delay value **466** is introduced into the Tx PN generator of the second subscriber unit **464** the propagation delay of communications between the first subscriber unit **462** and the base station **460** will be the same as the propagation delay of communications between the second subscriber unit **464** and the base station **460**. Viewed from the base station **460**, it appears as though the second subscriber unit **464** is located at the virtual range **464'**.

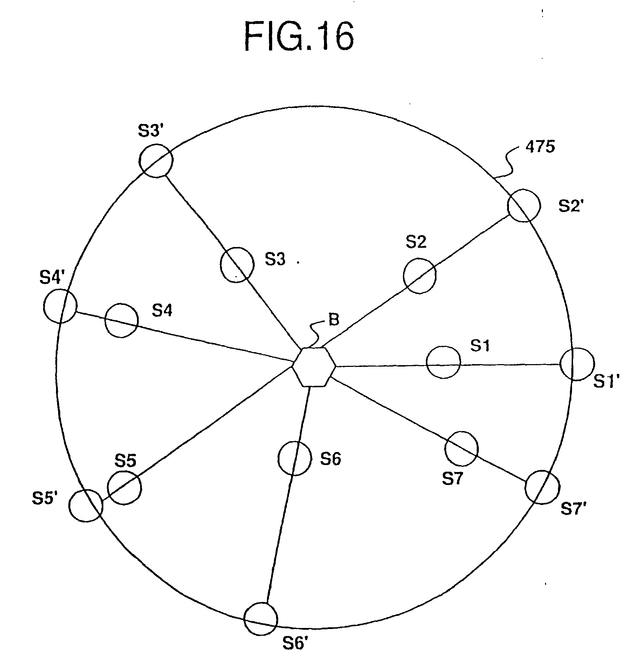

Referring to Figure **16,** it can be seen that when a plurality of subscriber units **S1 - S7** are virtually relocated **S1' - S7'** to the virtual range **475,** the base station **B** must only test the code phase delays centered about the virtual range **475**.

Utilizing the present invention, a subscriber unit **316** which has achieved a sufficient power level will be acquired by the base station **314** in approximately 2 msec. Due to the shorter acquisition time, the subscriber unit **316** can ramp-up at a much faster rate, (on the order of 1 dB/msec), without significantly overshooting the desired power level. Assuming the same 20 dB power back-off, it would take the subscriber unit **316** approximately 20 msec to reach the sufficient power level for detection by the base station **314.** Accordingly, the entire duration of the re-acquisition process of the present invention is approximately 22 msec, which is an order of magnitude reduction from prior art reacquisition methods.

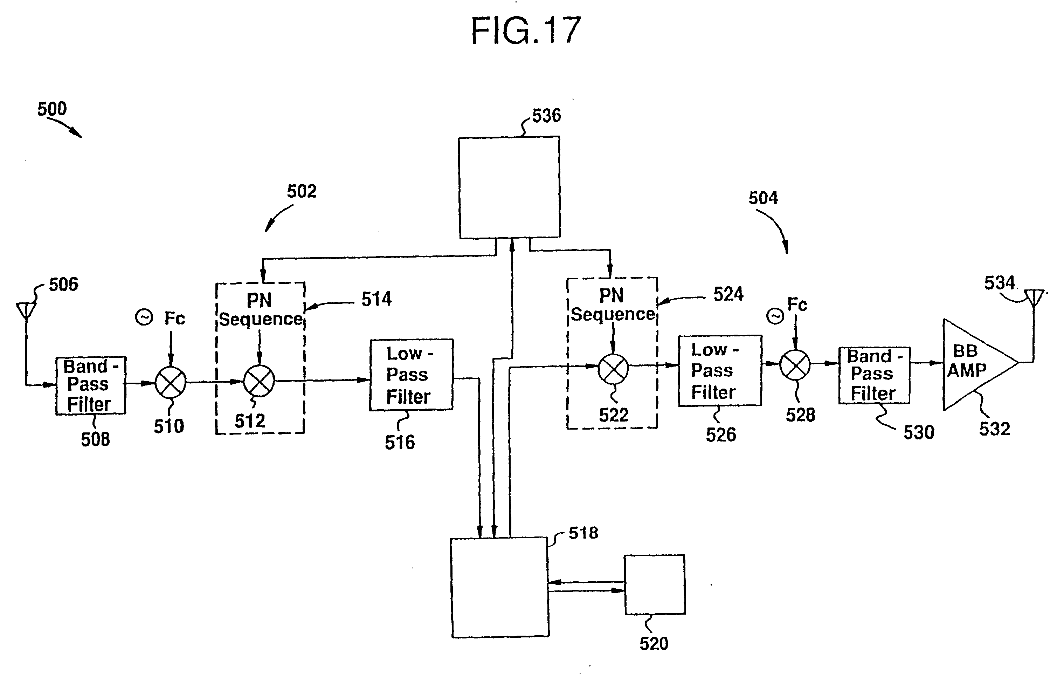

A subscriber unit **500** made in accordance with this embodiment of the present invention is shown in **Figure 17**. The subscriber unit **500** includes a receiver section **502** and a transmitter section **504**. An antenna **506** receives a signal from the base station **314**, which is filtered by a band-pass filter **508** having a bandwidth equal to twice the chip rate and a center frequency equal to the center frequency of the spread spectrum system's bandwidth. The output of the filter **508** is down-converted by a mixer **510** to a baseband signal using a constant frequency (Fc) local oscillator. The output of the mixer **510** is then spread spectrum decoded by applying a PN sequence to a mixer **512** within the PN Rx generator **514**. The output of the mixer **512** is applied to a low pass filter **516** having a cutoff frequency at the data rate (Fb) of the PCM data sequence. The output of the filter **516** is input to a coder/decoder (codec) **518** which interfaces with the communicating entity **520**.

A baseband signal from the communicating entity **520** is pulse code modulated by the codec **518**. Preferably, a 32 kilobit per second adaptive pulse code modulation (ADPCM) is used. The PCM signal is applied to a mixer **522** within a PN Tx generator **524**. The mixer **522** multiplies the PCM data signal with the PN sequence. The output of the mixer **522** is applied to low-pass filter **526** whose cutoff frequency is equal to the system chip rate. The output of the filter **526** is then applied to a mixer **528** and suitably up-converted, as determined by the carrier frequency Fc applied to the other terminal. The up-converted signal is then passed through a band-pass filter **530** and to a broadband RF amplifier **532** which drives an antenna **534**.

The microprocessor **536** controls the acquisition process as well as the Rx and Tx PN generators **514**, **524**. The microprocessor **536** controls the code phase delay added to the Rx and Tx PN generators **514**, **524** to acquire the forward pilot signal **320**, and for the subscriber unit **500** to be acquired by the base station **314**, and records the code phase difference between these PN generators. For re-acquisition the microprocessor **536** adds the recorded delay to the Tx PN generator **524**.

The base station **314** uses a configuration similar to the subscriber unit **316** to detect PN coded signals from the subscriber unit **500.** The microprocessor (not shown) in the base station **314** controls the Rx PN generator in a similar manner to make the code phase difference between Rx PN generator and the Tx PN generator equivalent to the two-way propagation delay of the subscriber unit's **316** virtual location. Once the base station **314** acquires the access signal **322** from the subscriber unit **316**, all other signals from the subscriber unit **316** to the base station **314** (traffic, pilot, etc.) use the same code phase delay determined during the acquisition process.

It should be noted that although the invention has been described herein as the virtual locating of subscriber units **316** at the periphery of the cell **330** the virtual location can be at any fixed distance from the base station **314**.

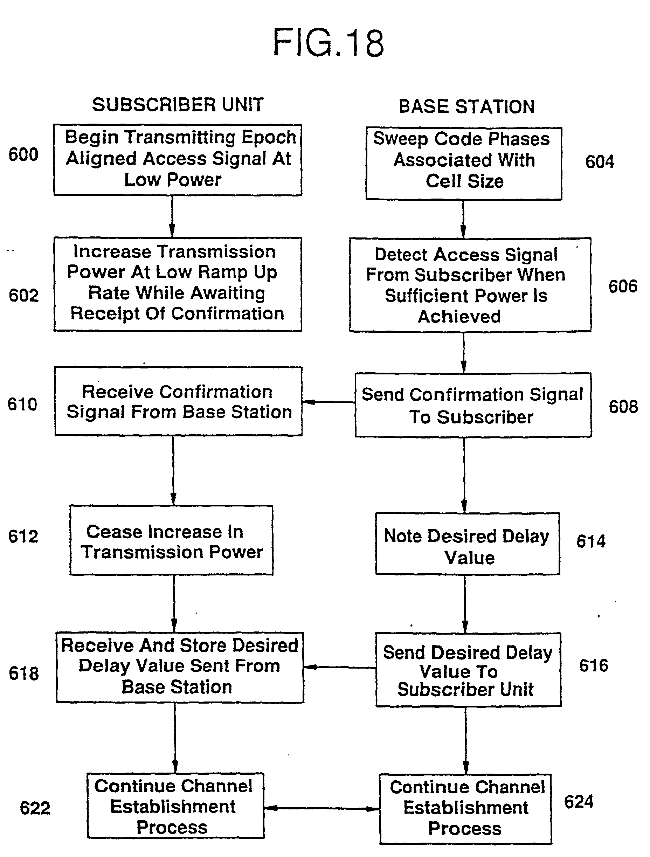

Referring to **Figure 18,** the tasks associated with initial acquisition of a "never-acquired" subscriber unit **316** by a base station **314** in accordance with an alternative embodiment of the present invention are shown. The subscriber unit **316** continuously transmits an epoch aligned access signal **322** to the base station **314 (step 600)** when the establishment of a channel **318** is desired. While the subscriber unit **316** is awaiting the receipt of a confirmation signal from the base station **314**, it continuously increases the transmission power as it continues transmission of the access signal **322 (step 602).**

To detect subscriber units which have never been acquired, the base station **314** transmits a forward pilot signal **320** and sweeps the cell by searching all code phases corresponding to the entire range of propagation delays of the cell **(step 604)** and detects the epoch aligned access signal **322** sent from the subscriber unit **316** after the transmission has achieved sufficient power for detection **(step 606)**. The base station **314** transmits a signal to the subscriber unit **316 (step 608)** which confirms that the access signal **322** has been received. The subscriber unit **316** receives the confirmation signal **(step 610)** and ceases the increase in transmission power **(step 612).**

The base station **314** determines the desired code phase delay of the subscriber unit **316** by noting the difference **(step 614)** between the Tx and Rx PN generators **524, 514** after acquiring the subscriber unit **316.** The desired code phase delay value is sent to the subscriber unit **316 (step 616)** as an OA&M message, which receives and stores the value **(step 618)** for use during re-acquisition, and continues with the channel establishment process **(steps 622 and 624)**.

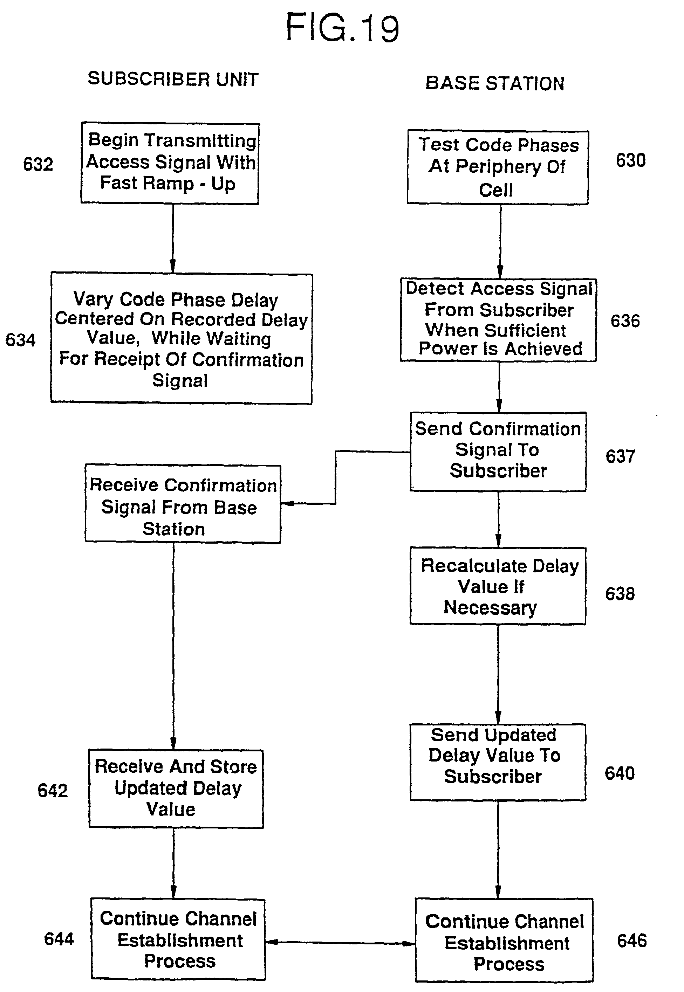

Referring to **Figure 19**, an alternative method of fast reacquisition in accordance with the present invention is shown. When a communication channel must be reestablished between the subscriber unit **316** and the base station **314**, the subscriber unit **316** transmits the access signal **322** with the desired code phase delay as in the preferred embodiment.

With all of the previously acquired subscriber units **316** at the same virtual range, the base station **314** need only search the code phase delays centered about the periphery of the cell to acquire the access signals **322** of such subscriber units **316 (step 630)**. Thus, a subscriber unit **316** may ramp-up power rapidly to exploit the more frequent acquisition opportunities. The subscriber unit **316** implements the delay the same way as in the preferred embodiment. The base station **314** subsequently detects the subscriber unit **316** at the periphery of the cell **(step 636)**, sends a confirmation signal to the subscriber unit **(step 637)** and recalculates the desired code phase delay value, if necessary. Recalculation **(step 638)** compensates for propagation path changes, oscillator drift and other communication variables. The subscriber unit **316** receives the confirmation signal from the base station **316 (step 639).**

The base station **314** sends the updated desired code phase delay value to the subscriber unit **316 (step 640)** which receives and stores the updated value **(step 642)**. The subscriber unit **316** and the base station **314** then continue the channel establishment process communications (**steps 644 and 646**).

Note that the alternative embodiment requires the base station to search both the code phase delays centered on the periphery of the cell to re-acquire previously acquired subscriber units and the code phase delays for the entire cell to acquired subscriber units which have never been acquired.

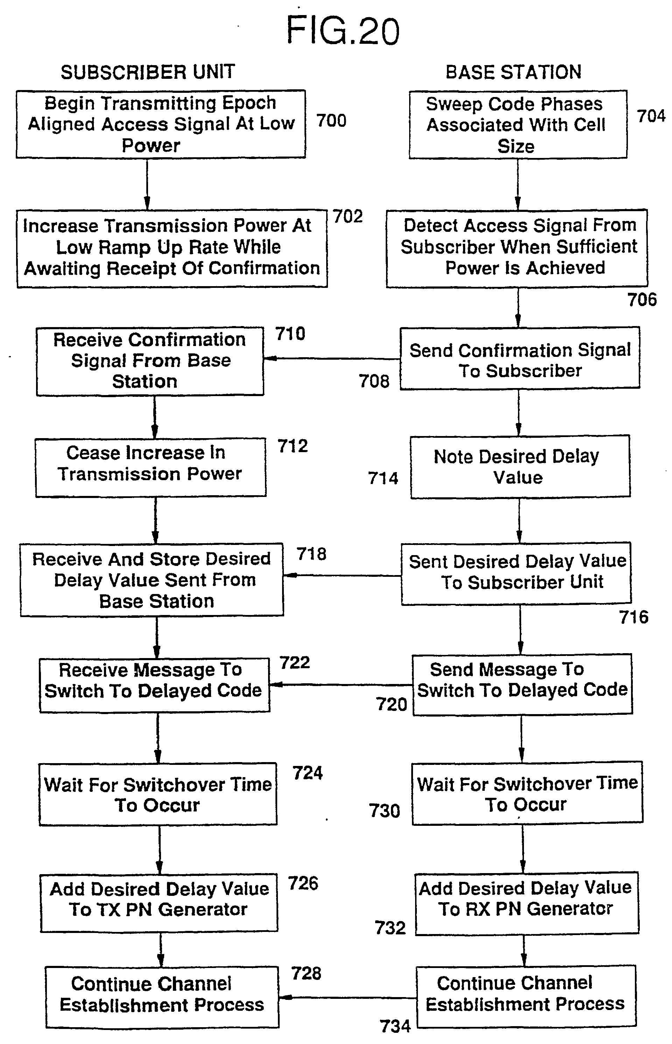

Referring to **Figure 20**, the tasks associated with initial acquisition of a never-acquired subscriber unit **316** by a base station **314** in accordance with a second alternative embodiment of the present invention are shown. In the embodiment shown in **Figure 18**, when a never-acquired subscriber unit **316** is acquired, the access signal **320** remains epoch aligned to the forward pilot signal **320**. In this embodiment, the base station **314** and subscriber unit **316** change the code phase alignment of the access signal **322** from epoch aligned to delayed, (by the code phase delay), to make the subscriber unit **316** appear at the periphery of the cell. This change is performed at a designated time.

**Steps 700** through **718** are the same as the corresponding **steps 600** through **618** shown in **Figure 18**. However, after the base station **314** sends the desired delay value to the subscriber unit **316 (step 716)** the base station **314** sends a message to the subscriber unit **316** to switch to the desired delay value at a time referenced to a sub-epoch of the forward pilot signal **320 (step 720).** The subscriber unit **316** receives this message **(step 722),** and both units **314, 316** wait until the switchover time is reached **(steps 724, 730).** At that time, the base station **314** adds the desired delay value to its Rx PN operator **(step 732)** and the subscriber unit **316** adds the same desired delay value to its Tx PN generator **(step 726).** The subscriber unit **316** and the base station **314** then continue the channel establishment process communication **(step 728, 734).**

Although the invention has been described in part by making detailed reference to the preferred embodiment, such detail is intended to be instructive rather than restrictive. It will be appreciated by those skilled in the art that many variations may be made in the structure and mode of operation without departing from the scope of the claims.

## Claims

1. A subscriber unit (16) for communicating with a base station (14), said subscriber unit (16) having means (70, 52) for transmitting and detecting signals, said subscriber unit (16) **characterized by**:
means (74) for selectively transmitting a short code at a selected transmission power level;
means for detecting a confirmation signal from said base station (14); the confirmation signal indicating that said base station (14) detected said short code;
control means (74), responsive to said means for detecting (78), for varying said transmission power level; wherein said control means (74) increases said transmission power level at a first rate prior to the receipt of a confirmation signal;
means (74) for ceasing the short code transmitting and transmitting an access code which is longer than said short code at a second rate lower than said first rate when said confirmation signal is received; and
means (78) for ceasing increasing transmission power ramp-up at the second ramp-up rate, in response to receiving an acknowledgement signal indicating that said base station (14) detected said access code.

2. The subscriber unit (16) according to claim 1 wherein said access code is initially transmitted at a power level lower than the power level required for detection by said base station (14).

3. The subscriber unit (16) according to one of claims 1-2 wherein said first rate is approximately 1.0dB/msec and said second rate is approximately 0.05dB/msec.

4. The subscriber unit (16) according to one of claims 1-3 wherein said short code is a portion of said access code.

5. The subscriber unit (16) according to one of claims 1-4 wherein the period of said access code is an even multiple of the period of said short code.

6. The subscriber unit (16) according to one of claims 1-4 wherein a start of said access code is synchronized with a start of said short code.

7. A method for controlling transmission power of a subscriber unit (16) during the establishment of communications between a base station (14) and the subscriber unit (16), the method **characterized by**:
said subscriber unit (16) transmitting a short code at an initial predetermined power level (158);
increasing said power level at a predetermined first ramp-up rate (160);
receiving a confirmation signal at said subscriber unit (16), said confirmation signal indicating that said base station (14) detected said short code;
ceasing the short code transmitting and transmitting an access code which is longer than said short code at a predetermined second ramp-up rate lower than said first rate when said confirmation signal is received (166); and
in response to receiving the acknowledgement signal, ceasing increasing transmission power ramp-up at the second ramp-up rate (178), the acknowledgement signal indicating that said base station (14) detected said access code.

8. The method according to claim 7 wherein said initial predetermined power level is lower than the power level required for detection by said base station (14).

9. The method according to claim 8 wherein said first rate is approximately 1.0dB/msec and said second rate is approximately 0.05dB/msec.

10. The method according to one of claims 7-9 wherein said short code is synchronized with a received pilot signal.

11. The method according to one of claims 7-10 wherein said access code has a period which is a multiple of a period of said short code.

12. The method according to one of claims 7-11 wherein said short code has a period which is a single symbol length.

13. The method according to one of claims 7-12 wherein a start of said access code is synchronized with a start of said short code.

## Patentansprüche

1. Teilnehmereinheit (16) zur Kommunikation mit einer Basisstation (14), wobei die Teilnehmereinheit (16) eine Einrichtung (70, 52) zum Senden und Erfassen von Signalen aufweist, wobei die Teilnehmereinheit (16) **gekennzeichnet ist durch**:
- eine Einrichtung (74) zum selektiven Senden eines kurzen Codes mit einem ausgewählten Sendeleistungspegel;
- eine Einrichtung zum Erfassen eines Bestätigungssignals von der Basisstation (14); wobei das Bestätigungssignal anzeigt, dass die Basisstation (14) den kurzen Code erfasst hat;
- eine Steuereinrichtung (74), die auf die Einrichtung (78) zum Erfassen anspricht, um den Sendeleistungspegel zu variieren; wobei die Steuereinrichtung (74) den Sendeleistungspegel vor Empfang eines Bestätigungssignals mit einer ersten Rate erhöht;
- eine Einrichtung (74) zum Einstellen des Sendens des kurzen Codes und zum Senden eines Zugriffscodes, der länger als der kurze Code ist, mit einer zweiten Rate, die geringer als die erste Rate ist, wenn das Bestätigungssignals empfangen wird; und
- eine Einrichtung (78) zum Einstellen der Erhöhung der Sendeleistungserhöhung mit einer zweiten Erhöhungsrate in Reaktion auf das Empfangen eines Bestätigungssignals, das anzeigt, dass die Basisstation (14) den Zugriffscode erfasst hat.

2. Teilnehmereinheit (16) nach Anspruch 1, bei der der Zugriffscode anfänglich mit einem Leistungspegel gesendet wird, der niedriger als der zur Erfassung durch die Basisstation (14) erforderliche Leistungspegel ist.

3. Teilnehmereinheit (16) nach einem der Ansprüche 1 bis 2, bei der die erste Rate ungefähr 1,0 dB/ms und die zweite Rate ungefähr 0,05 dB/ms ist.

4. Teilnehmereinheit (16) nach einem der Ansprüche 1 bis 3, bei der der kurze Code ein Teil des Zugriffscodes ist.

5. Teilnehmereinheit (16) nach einem der Ansprüche 1 bis 4, bei der die Periode des Zugriffscodes eine ganzzahlige Vielfache der Periode des kurzen Codes ist.

6. Teilnehmereinheit (16) nach einem der Ansprüche 1 bis 4, bei der ein Beginn des Zugriffscodes mit einem Beginn des kurzen Codes synchronisiert ist.

7. Verfahren zum Steuem einer Sendeleistung einer Teilnehmereinheit (16) während der Herstellung von Kommunikationsverbindungen zwischen einer Basisstation (14) und der Teilnehmereinheit (16), wobei das Verfahren durch die folgenden Schritte gekennzeichnet ist:
- Senden eines kurzen Codes mit einem anfänglichen vorbestimmten Leistungspegel (158) von der Teilnehmereinheit (16);
- Erhöhen des Leistungspegels mit einer vorbestimmten ersten Erhöhungsrate (160);
- Empfangen eines Bestätigungssignals bei der Teilnehmereinheit (16), wobei das Bestätigungssignal anzeigt, dass die Basisstation (14) den kurzen Code erfasst hat;
- Einstellen des Sendens des kurzen Codes und Senden eines Zugriffscodes, der länger als der kurze Code ist, mit einer vorbestimmten Erhöhungsrate, die niedriger als die erste Rate ist, wenn das Bestätigungssignal empfangen wird (166); und
- in Reaktion auf das Empfangen des Bestätigungssignals, Einstellen des Erhöhens der Sendeleistungserhöhung mit der zweiten Erhöhungsrate (178), wobei das Bestätigungssignal anzeigt, dass die Basisstation (14) den Zugriffscode erfasst hat.

8. Verfahren nach Anspruch 7, bei dem der anfängliche vorbestimmte Leistungspegel kleiner als der zur Erfassung durch die Basisstation (14) erforderliche Leistungspegel ist.

9. Verfahren nach Anspruch 8, bei dem die erste Rate ungefähr 1,0 dB/ms und die zweite Rate ungefähr 0,05 dB/ms ist.

10. Verfahren nach einem der Ansprüche 7 bis 9, bei dem der kurze Code mit einem empfangenen Pilotsignal synchronisiert ist.

11. Verfahren nach einem der Ansprüche 7 bis 10, bei dem der Zugriffscode eine Periode hat, die eine Vielfache einer Periode des kurzen Codes ist.

12. Verfahren nach einem der Ansprüche 7 bis 11, bei dem der kurze Code eine Periode hat, die eine einfache Symbollänge ist.

13. Verfahren nach einem der Ansprüche 7 bis 12, bei dem ein Beginn des Zugriffscodes mit einem Beginn des kurzen Codes synchronisiert ist.

## Revendications

1. Unité d'abonné (16) pour communiquer avec une station de base (14), ladite unité d'abonné (16) comportant des moyens (70, 52) pour émettre et détecter des signaux, ladite unité d'abonné (16) étant **caractérisée par** :
des moyens (74) pour émettre de manière sélective un code court à un niveau de puissance d'émission sélectionné ;
des moyens pour détecter un signal de confirmation provenant de ladite station de base (14) ; le signal de confirmation indiquant que ladite station de base (14) a détecté ledit code court ;
des moyens de commande (74), sensibles auxdits moyens pour détecter (78), pour modifier ledit niveau de puissance d'émission ; dans laquelle lesdits moyens de commande (74) augmentent ledit niveau de puissance d'émission à un premier taux de variation avant la réception d'un signal de confirmation ;
des moyens (74) pour cesser l'émission du code court et pour émettre un code d'accès qui est plus long que ledit code court à un deuxième taux de variation inférieur audit premier taux de variation lorsque ledit signal de confirmation est reçu ; et
des moyens (78) pour cesser l'augmentation de rampe de puissance d'émission au deuxième taux de variation de rampe, en réponse à la réception d'un signal d'acquittement indiquant que ladite station de base (14) a détecté ledit code d'accès.

2. Unité d'abonné (16) selon la revendication 1, dans laquelle ledit code d'accès est initialement émis à un niveau de puissance inférieur au niveau de puissance requis pour la détection par ladite station de base (14).

3. Unité d'abonné (16) selon l'une des revendications 1 à 2, dans laquelle ledit premier taux de variation est approximativement de 1,0 dB/ms et ledit deuxième taux de variation est approximativement de 0,05 dB/ms.

4. Unité d'abonné (16) selon l'une des revendications 1 à 3, dans laquelle ledit code court est une partie dudit code d'accès.

5. Unité d'abonné (16) selon l'une des revendications 1 à 4, dans laquelle la période dudit code d'accès est un multiple pair de la période dudit code court.

6. Unité d'abonné (16) selon l'une des revendications 1 à 4, dans laquelle un début dudit code d'accès est synchronisé avec un début dudit code court.

7. Procédé pour commander la puissance d'émission d'une unité d'abonné (16) pendant l'établissement de communications entre une station de base (14) et l'unité d'abonné (16), le procédé étant **caractérisé par** :
ladite unité d'abonné (16) émettant un code court à un niveau de puissance prédéterminé initial (158) ;
l'augmentation dudit niveau de puissance à un premier taux de variation de rampe prédéterminé (160) ;
la réception d'un signal de confirmation au niveau de ladite unité d'abonné (16), ledit signal de confirmation indiquant que ladite station de base (14) a détecté ledit code court ;
la cessation de l'émission du code court et l'émission d'un code d'accès qui est plus long que ledit code court à un deuxième taux de variation de rampe prédéterminé inférieur audit premier taux de variation lorsque ledit signal de confirmation est reçu (166) ; et
en réponse à la réception d'un signal d'acquittement, la cessation de l'augmentation de la rampe de puissance d'émission au deuxième taux de variation de rampe (178), le signal d'acquittement indiquant que ladite station de base (14) a détecté ledit code d'accès.

8. Procédé selon la revendication 7, dans lequel ledit niveau de puissance prédéterminé initial est inférieur audit niveau de puissance requis pour la détection par ladite station de base (14).

9. Procédé selon la revendication 8, dans lequel ledit premier taux de variation est approximativement de 1,0 dB/ms et ledit deuxième taux de variation est approximativement de 0,05 dB/ms.

10. Procédé selon l'une des revendications 7 à 9, dans lequel ledit code court est synchronisé avec un signal pilote reçu.

11. Procédé selon l'une des revendications 7 à 10, dans lequel ledit code d'accès a une période qui est un multiple d'une période dudit code court.

12. Procédé selon l'une des revendications 7 à 11, dans lequel ledit code court a une période qui est une longueur de symbole unique.

13. Procédé selon l'une des revendications 7 à 12, dans lequel un début dudit code d'accès est synchronisé avec un début dudit code court.
